Europäisches Patentamt

European Patent Office

Office européen des brevets

(11) Veröffentlichungsnummer: **0 038 421**
**A1**

## (12) EUROPÄISCHE PATENTANMELDUNG

(21) Anmeldenummer: **81101894.4**

(22) Anmeldetag: **14.03.81**

(51) Int. Cl.³: **A 62 C 35/20**
**F 16 L 37/04, F 16 L 37/24**
**F 16 L 33/02, F 16 L 11/10**

(30) Priorität: **18.03.80 DE 3010404**

(43) Veröffentlichungstag der Anmeldung:
**28.10.81 Patentblatt 81/43**

(84) Benannte Vertragsstaaten:
**AT BE CH FR GB IT LI NL SE**

(71) Anmelder: **Hirmer, Sigmund**
**Kirchbachlweg 19**
**D-8201 Riedering(DE)**

(72) Erfinder: **Hirmer, Sigmund**
**Kirchbachlweg 19**
**D-8201 Riedering(DE)**

(74) Vertreter: **Wey, Hans-Heinrich, Dipl.-Ing. et al,**
**Patentanwälte Müller-Börner Wey & Körner**
**Widenmayerstrasse 49**
**D-8000 München 22(DE)**

(54) Feuerlöschgerät zur Bekämpfung von Bränden mit Haushalt-Leitungswasser.

(57) Feuerlöschgerät zum Anschliessen an Haushaltwasser-zapfstellen, bestehen aus einem an einem Ende mit einem Anschlussstück (85) an die Zapfstelle und am anderen Ende mit einer Löschdüse versehenen Schlauch, welcher an seinem an der Aussenseite der Spirale liegenden Anschlussende eine Bajonettkupplung (87) und Sitzflächen (84a) für eine Dichtung (84) aufweist, die wahlweise an einem entsprechend ausgebildeten Gehäuse eines Lüfters einer Zapfstelle oder an einem auf eine Wasserzapfstelle mit kleinerem Auslauf aufsteckbaren Schnellanschluss (51) ankuppelbar ist

FIG. 6

EP 0 038 421 A1

1.

Feuerlöschgerät zur Bekämpfung von Bränden mit Haushalt-Leitungswasser.

— — — — — — — — — —

Die Erfindung betrifft ein Feuerlöschgerät, welches auch von ungeübten Personen schnell, d.h. in wenigen Sekunden, an jede beliebige Wasserzapfstelle im Haushalt oder kleineren Betrieben aufgesteckt und betriebsbereit gemacht werden kann, so dass es zur Bekämpfung insbesondere von Entstehungsbränden verwendbar ist.

Zum Löschen insbesondere von Entstehungsbränden in Wohnungen, Büros, kleineren Lagerräumen od.dgl. werden bisher Handfeuerlöscher vorgesehen. Diese Handfeuerlöscher erfordern eine periodische Überwachung auf Funktionsfähigkeit. Sie haben ferner nur ein begrenztes Füllvermögen, so dass auch die Zeit zum Löschen von Bränden auf eine relativ kurze Zeitspanne begrenzt ist. Ausserdem sind derartige Feuerlöscher relativ teuer.Da ihre Anordnung aus feuerschutz-und versicherungstechnischen Gründen an bestimmten Stellen vorgeschrieben ist, beeinträchtigen sie oft den nutzbaren Wohn-und Arbeitsraum und stören das ästhetische Empfinden.

Übliche Wasserschläuche, wie sie z.B. zum Waschen von Kraftfahrzeugen und zum Sprengen des Gartens verwendet werden, sind zur Verwendung als Löschgerät ungeeignet. Sie benötigen für die dabei verwendeten Schlauchanschlüsse bestimmte, speziell ausgebildete Zapfstellen, z.B. mit Gewinde am Auslauf, um eine am Schlauch befestigte Verschraubung aufschrauben zu können oder spezielle Steckverbinder. Derartige Zapfstellen sind daher aber in Wohnungen in der Regel nicht oder nur an einer von der zu erwartenden Brandstelle weit entfernten Stelle verfügbar. Ausserdem erfordert das Anbringen derartiger üblicher Schlauchverschraubungen an der Zapfstelle eine erhebliche Zeit.

Durch die möglicherweise grosse Entfernung einer für
die üblichen Schläuche geeigneten Zapfstelle von der
möglichen Brandstelle müsste bei der Verwendung von
derartigen bekannten Schläuchen als Löschgerät die
Schlauchlänge relativ gross bemessen werden, wodurch
der Platzbedarf für die Aufbewahrung des Schlauches, in
Verbindung mit dessen relativ starren Querschnitt,
gross und das gesamte Gerät sehr unhandlich wäre. Insbesondere besteht auch die Gefahr, dass der Schlauch
beim Ausrollen sich verschlingt und in engen Schleifen
knickt, so dass der Wasserdurchgang behindert ist, oder
ein erheblicher Zeitaufwand zum Auflösen der Schlauchverschlingungen benötigt wird.

Die Erfindung soll ein billiges Feuerlöschgerät schaffen, das sehr schnell, d.h. in wenigen Sekunden, auch
von unerfahrenen und ungeübten Benutzern in Paniksituationen betriebsbereit gemacht werden kann, indem es an
beliebige Zapfstellen in der Wohnung oder den sonstigen
Räumlichkeiten angeschlossen, und der Schlauch schnell
und ohne Gefahr von Verschlingungen bis zur Brandstelle
ausgerollt werden kann.

Dazu kann ein Schnellanschlusstück Verwendung finden,
welches besteht aus einer am Schlauch druckdicht befestigten, druckfesten Aussenhülle, die von einem kleinsten Querschnitt am Schlauchanschlusstutzen entsprechend
dem Schlauchquerschnitt an der Befestigungsstelle auf
einen Innenquerschnittsbereich am freien Rand grösser
als die Aussenquerschnittsfläche jeder in der Gebäudeanlage verfügbaren Zapfstelle sich erweitert, und an
deren freien Rand eine leicht elastisch verformbare
Membran druckdicht befestigt ist, die vom freien Rand
der Aussenhülle bis zu einer Mittelöffnung mit kleinerer Querschnittsfläche, als dem kleinsten zu erwartenden Aussenquerschnitt einer Zapfstelle verläuft, wobei
Anordnungen vorgesehen sind, um die elastische Membran gegen Innendruck abzustützen.

Ein mit einem derartigen Schnellanschluss ausgestattetes Feuerlöschgerät kann sehr schnell, d.h. in wenigen Sekunden von unerfahrenen, ungeübten Benutzern auch in Paniksituationen betriebsbereit gemacht werden, indem es an entsprechenden Zapfstellen in der Wohnung oder den sonstigen Räumlichkeiten angeschlossen und der Schlauch schnell und ohne Gefahr von Verschlingungen bis zur Brandstelle ausgerollt werden kann.

Das bei diesem Feuerlöschgerät verwendete Schnellanschlusstück ergibt jedoch Schwierigkeiten beim Aufsetzen auf bestimmte moderne Sanitärarmaturen, bei denen der Auslauf sehr häufig über die Länge und den Umfang sich stark ändernde Querschnittsabmessungen aufweist, so dass beim Aufziehen die Dichtungsmembran des Schnellanschlusstückes ungleichförmig, teilweise sehr stark gedehnt werden muss. Ferner bestehen Schwierigkeiten, den in der Regel als Hilfsanordnung zum Abstützen der Membran gegen Innendruck verwendeten Gurt an der Armatur so zu befestigen, dass der Wasserstrahl etwa axial zur Längsachse des Schnellanschlusstückes austritt.

Es ist die der Erfindung zugrunde liegende Aufgabe, ein Feuerlöschgerät so auszubilden, dass es an alle Arten von Hauswasserausläufen, also auch an Ausläufe derartiger moderner Sanitärarmaturen schnell von ungeübten Personen anbringbar ist, ohne dass dadurch die Möglichleit des Anschlusses mittels des Schnellanschlusstükes auf normale Ausläufe mit rundem oder rechteckigem Querschnitt beeinträchtigt wird.

Dies wird gemäss der Erfindung durch die im kennzeichnenden Teil des Anspruchs 1 enthaltenen Merkmale erreicht.

Durch diese erfindungsgemässe Ausbildung des Feuerlöschgerätes wird die Funktion und Handhabung dieses Feuerlöschgerätes mit Schnellanschluss nicht beeinflusst.
Für Ausläufe von Sanitärarmaturen, bei denen das Schnellanschlusstück nicht sicher dicht aufgesetzt werden kann,
braucht nur der Schlauch mittels des Schnellanschlussstückes, z.B. Bajonettkupplung ggf. vom Schnellanschlussstück gelöst und an das entsprechend als Gegenstück ausgebildete Gehäuse des an dem Auslauf angebrachten Belüfters angekuppelt werden. Dadurch tritt keine Zeitverzögerung ein, d.h. der Anschluss gemäss der Erfindung erfolgt ebenso narrensicher und praktisch in der gleichen kurzen Zeit, wie bei Verwendung des Schnellanschlusstückes. Es brauchen nur einmal beim Erwerb des
Feuerlöschgerätes die z.B. mit diesem mitgelieferten
als Bajonettkupplungsteil ausgebildeten Belüfter (auch
Perlator genannt) gegen die bei allen modernen Armaturen vorgesehenen entsprechenden handelsüblichen genormten Belüfter ausgetauscht werden. Eine ins Gewicht fallende Veränderung tritt damit nicht auf, da das Gehäuse
des erfindungsgemäss verwendeten Belüfters nur geringfügig länger, als das Gehäuse des handelsüblichen Belüfters sein muss, und die Belüftungsanordnung im Inneren
die gleiche ist. Die Anschlussgewinde für die Belüfter
sind genormt, so dass der Austausch keinerlei Schwierigkeiten bereitet. Das erfindunsgemässe Feuerlöschgerät
kann also auch z.B. an Badewannenausläufen mit sehr
grossem Aussenumfang schnell angeschlossen werden. Es
benötigt praktisch nicht mehr Platz als ein Feuerlöschgerät nur mit Schnellanschluss, so dass es, wie dieses
in einem flachen Kasten untergebracht werden kann.

Vorzugsweise Weiterbildungsformen sind in den weiteren
Ansprüchen gekennzeichnet. Wenn im Haushalt nur Ausläufe mit Belüfter vorhanden sind, kann selbstverständlich
auch nur die im Anspruch gekennzeichnete Anordnung,
ohne Schnellanschlusstück, vorgesehen sein.

_5_

Die Ausbildung der Stifte der Bajonettkupplung mit quadratischem Querschnitt stellt sicher, dass bei Verschmutzung der Schlitze der Bajonettkupplung die darin enthaltenen Verunreinigungen vor dem Verriegeln ausgekratzt werden und nicht, wie bei runden Stiften in die keilförmigen Seitenschlitze zwischen Stiftumfang und Schlitzwand eingepresst werden und dadurch die Bewegung der Bajonettkupplung hemmen. Ein entsprechendes Spiel zwischen dem Stift und dem Schlitz stellt eine leichte Bewegungsmöglichkeit bei der Verriegelung der Bajonettkupplung auch bei Ansammlung von Verunreinigungen sicher.

Durch die an sich bekannte Anordnung der Vertiefungen am Ende des Verriegelungsabschnittes des Schlitzes, in welchen in Schliesstellung die Stifte sich einlegen, wird ein unbeabsichtigtes Lösen verhindert. Das Eindrücken der Stifte in die Vertiefungen erfolgt an sich durch den Wasserdruck in Schläuchen. Gemäss der Erfindung kann durch den zwischen dem freien Rand der Hülse und einer Gegenfläche angebrachten stark elastischen Ring, der praktisch als Rückstellfeder wirkt, eine Lösesicherung auch ohne Wasserdruck erreicht werden.

Die Verwendung einer Ringdichtung, in Verbindung mit einer leicht konischen Dichtfläche ermöglicht eine sichere Abdichtung auch gegen hohen Wasserdruck. Durch die Anordnung der Dichtung in der Hülse der Bajonettkupplung ist nur eine Dichtung für das Feuerlöschgerät erforderlich. Die entsprechenden Dichtsitzflächen an den Belüftergehäusen beeinträchtigen das Aussehen nicht.

Die Erfindung wird im folgenden anhand der Zeichnungen an einem Ausführungsbeispiel näher erläutert.

In den Zeichnungen zeigen:

Fig. 1 eine Draufsicht auf einen offenen Kasten eines Feuerlöschgerätes,

Fig. 2 einen Querschnitt durch den Schlauch,

Fig. 3 eine Seitenansicht auf eine Ausführungsform eines Schnellkupplungsstückes, in der rechten Bildhälfte im Längsschnitt

Fig. 4 eine Draufsicht auf das Schnellanschlusstück gemäss Fig. 3 mit einer Ausführungsform einer die Membran gegen Innendruck abstützenden Ringscheibe, und

Fig. 5 eine Ansicht ähnlich Fig. 4 auf eine andere Ausführungsform der Ringscheibe,

Fig. 6 teilweise im Schnitt eine Seitenansicht auf eine Bajonettverbindung zwischen dem Schlauch und dem Schnellanschlusstück, und

Fig. 7 eine Abwicklung eines Bajonettschlitzes mit in Verriegelungsstellung liegendem Stift.

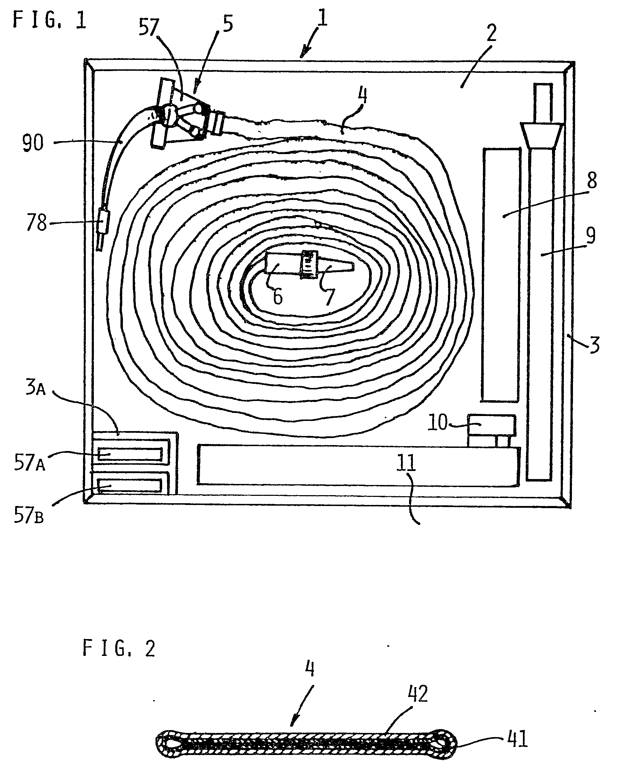

In Fig. 1, ist ein Kasten 1, z.B. aus Holz, Metall oder Kunststoff, gezeigt, der einen Boden 2 und Seitenwände 3 aufweist. Der Kasten ist etwa quadratisch und die Seitenwände haben eine Höhe von etwa 8 cm. Am Boden 2 sind nicht dargestellte Haken od.dgl. Halteeinrichtungen zum Anhängen der Teile des Feuerlöschgerätes vorgesehen. Im Hauptteil des Kastens ist ein Schlauch 4, der abgeflacht und spiralförmig aufgerollt ist, aufgehängt. An dem aussenliegenden Ende des Schlauches ist ein Schnellanschlusstück 5 mittels Bajonettkupplung befestigt, während am innenliegenden Ende des Schlauches ein Kupplungsstück 6 mit einer daran angekoppelten Sprühdüse 7 angebracht ist. Das Kupplungsstück 6 ist mit einer bekannten Schnellkupplungsvorrichtung zum Ansetzen der Düse 7 versehen.

Neben dem Schlauch hängt im Kasten ein Schaumrohr 9 mit einem Schaummittelbehälter 8. Dieses Schaumrohr 9 kann anstelle der Düse 7 am Kupplungsstück 6 mittels der Schnellkupplung angebracht werden. Im Betrieb saugt der durchgehende Wasserstrahl das Schaummittel aus dem Behälter 8 an und vermischt es mit dem Wasserstrom, der dann im Rohr 9 mit Luft vermischt und aufgeschäumt wird.

Am unteren Teil des Kastens 1 liegt ein Zwischenstück 10 mit einem Behälter 11 für ein Zusatzlöschmittel, das z.B. die elektrische Leitfähigkeit des Wassers stark herabsetzt. Das Zwischenstück 10 kann zwischen das Kupplungsstück 6 und die Düse 7 mittels Schnellkupplungen eingesetzt werden, wobei bei Betrieb durch den Wasserstrom das Zusatzlöschmittel aus dem Behälter 11 angesaugt und mit dem Wasserstrom vermischt wird, der dann durch die Auslaufdüse 7 ausgespritzt wird. Das Löschgerät wird dadurch unter bestimmten Bedingungen für die Bekämpfung von Entstehungsbränden in elektrischen Anlagen, wie sie im Haushalt oder kleineren Betrieben vorgesehen sind, geeignet. In ähnlicher Weise kann im Kasten ein Zwischenstück 10 mit Behälter 11 z.B. mit einem Zusatzlösemittel zum Wasser für die Bekämpfung von anderen Bränden vorgesehen sein.

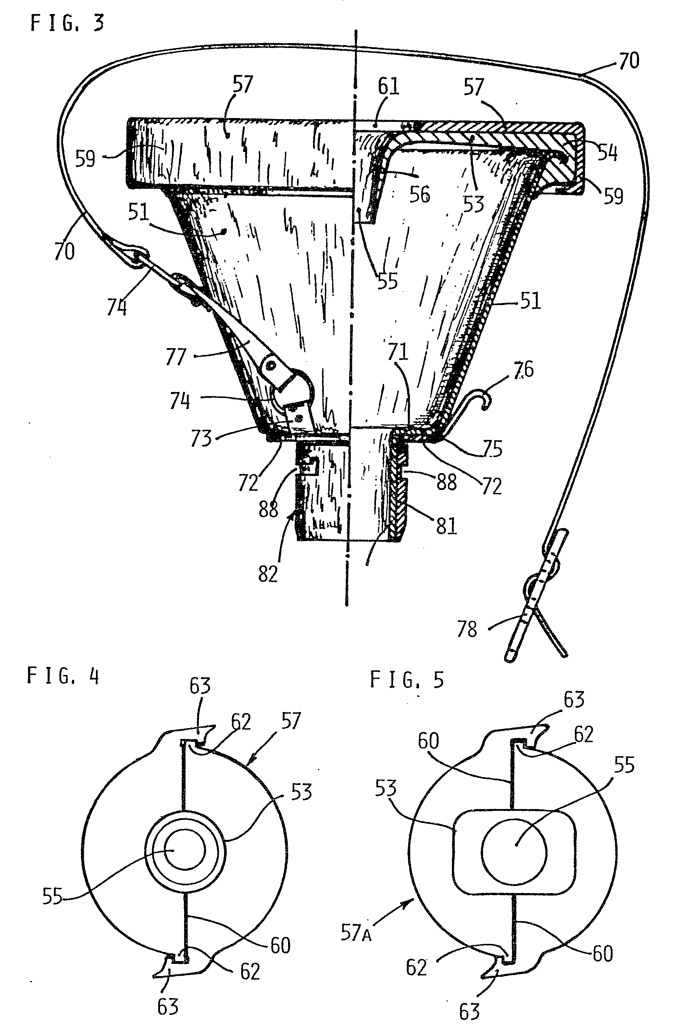

In der linken untern Ecke des Kastens 1 sind Fächer 3a zur Aufnahme von Verstärkungsringscheiben 57 bzw. 57a,b (Fig. 4 und 5)/vorgesehen, bzw.Lüftern die weiter unten beschrieben werden.

Der Kasten 1 gemäss Fig. 1 ist mittels einer nicht dargestellten Tür verschlossen, die vorteilhafterweise nach unten um 90° aufklappbar ist, so dass die Tür als Ablagebrett beim Herausnehmen der Einzelteile des Löschgerätes dienen kann. Die Tür kann mit einem Zierrahmen versehen sein, der als Füllung eine Spiegelscheibe aufweist. So dient das in einer Wohnung aufgehängte Feuerlöschgerät, z.B. als Garderobenspiegel, wobei im Gefahrenfall die Spiegelscheibe eingeschlagen und das Löschgerät entnommen werden kann.

In Fig. 2 ist ein Querschnitt durch den Schlauch 4 dargestellt. Dieser Schlauch 4 besteht aus einem Innenschlauch 41 aus einem leicht verformbaren Kunststoff, z.B. Polyurethan mit etwa 1 mm Wandstärke. Der Innenschlauch ist so geformt, dass er ohne Innendruck ein flach zusammengelegtes Doppelband darstellt, das an den Kanten geschlossen ist. Dieser Schlauch 41 aus Kunststoff ist von einem Gewebeschlauch 42 umgeben, der nicht mit dem Kunststoffschlauch verbunden ist. Dieser Gewebeschlauch ist so gewebt, dass er unter Druck seine Flächenabmessungen beibehält, d.h. dass er unter der Einwirkung des Innendruckes im Schlauch 41 sich zwar zum runden Querschnitt verformt, jedoch seine Flächenabmessungen in Umfangs- und Axialrichtungen nicht verändert. Er nimmt also praktisch den im Innenschlauch 41 herrschenden Druck auf. Dadurch, dass beide Schläuche nicht miteinander verbunden sind, sondern der Innenschlauch 41 nur lose im Aussenschlauch 42 liegt, ist der Schlauch wesentlich leichter biegbar und neigt beim Ausrollen weniger zum Kringeln.

Wie in Fig. 3 dargestellt, besteht eine bevorzugte Ausführungsform des Schnellanschlusstücke aus einer starren Aussenhülle 51, die an ihrem unteren Ende einen Schlauchanschlusstutzen 52 aufweist. Die Aussenhülle 51 erweitert sich nach oben auf einen Öffnungsquerschnitt grösser als die grösste zu erwartende Aussenabmessung des Auslaufes einer Zapfstelle. Der freie Rand der Aussenhülle 51 ist nach aussen umgebogen.

Über diesen freien Rand der Aussenhülle ist eine Membran 53 mit ihrem Rand 54 aufgesetzt. Die Membran 53 hat eine Mittelöffnung 55, die sich nach dem Inneren des Anschlusstückes in eine schlauchartige Verlängerung 56 fortsetzt. Diese schlauchartige Verlängerung nimmt sowohl an Durchmesser, als auch an Materialdicke nach innen auf eine freie Öffnung zu ab.

Über die Membran 53 ist eine Ringscheibe 57 aufgesetzt, die eine Mittelöffnung 61 aufweist. Die Ringscheibe umgreift mit ihrem äusseren Rand den Aussenrandbereich 54 der Membran 53 und den freien Rand der Aussenhülle 52 des Anschlusstückes 5.

Wie in Fig. 4 und 5 gezeigt, sind die Ringscheiben 57, bzw. 57a entlang einer Diagonallinie 60 geteilt. Sie haben jeweils eine Mittelöffnung 61 bzw. 61a, welche in ihrer Form dem Auslauf einer vorgesehenen Zapfstelle entspricht und etwas grösser als dessen Querschnitt ist. An einem Ende der Teilungslinie 60 ist an jeder Hälfte der Ringscheibe 57 bzw. 57a ein Vorsprung 62 vorgesehen, dessen von der Teilungslinie abgewandte Seite leicht nach innen zurückspringt. Am gegenüberliegenden Ende der Teilungslinie 60 ist an jeder der Hälften der Ringscheibe 57 bzw. 57a ein Haken 63 vorgesehen. Die Ringscheibe ist aus einem gering elastischen Material, z.B. Kunststoff hergestellt, so dass die Haken 63 sich ebenfalls elastisch etwas nach aussen biegen lassen. Die geteilten Ringscheiben 57 bzw. 57a können daher sehr einfach dadurch auf das Schnellanschlusstück 5 aufgesetzt werden, dass die beiden Hälften von gegenüberliegenden Seiten auf den Aussenrand 54 der Membran 53 und den freien Rand der Aussenhülle 51 aufgeschoben und zusammengedrückt werden, wobei die Haken 63 über die entsprechenden Vorsprünge 62 einrasten. Zum Lösen kann jeder der Haken an dem überspringenden freien Ende über den zugeordneten Vorsprung 62 angehoben und die so getrennten Ringscheibenhälften abgezogen werden.

Um zu verhindern, dass das Schnellanschlusstück von der Zapfstelle abrutscht oder sich gegen den Auslauf verkantet, und dadurch der Wasserausstrom aus der Zapfstelle behindert wird, ist, wie in Fig. 3 gezeigt, ein Ledergurt 70 vorgesehen. Zur Befestigung dieses Ledergurtes 70 am Schnellanschlusstück 5 ist in der Aussenhülle 51 eine Schulter 71 vorgesehen, gegen welche von aussen ein Haltering 72 anliegt. Dieser Haltering hat drei gleichmässig um den Umfang verteilte Laschen. Zwei dieser Laschen 75 tragen einen Ring 74. Die gegenüberliegende dritte Lasche 75 ist zu einem Haken 76 ausgebildet. Der Gurt läuft an seinem einen Ende in zwei Teilgurte 77 aus, deren jeder an einem der Ringe 74 befestigt ist. Das andere Ende des Gurtes 70 trägt eine Spannbefestigungseinrichtung, z.B. eine Durchziehschnalle 78, welche am Haken 76 an der Lasche 75 eingehängt werden kann.

Wenn das Schnellanschlusstück 5 auf die Zapfstelle aufgeschoben ist, wird der Ledergurt um die Zapfstelle geschlungen, mit der Schnalle 78 im Haken 76 eingehängt und stramm gezogen. Durch die Teilung des Gurtes an einem Befestigungsende in die Teilgurte 77 entsteht eine Dreipunktaufhängung, durch welche der Gurt 70 nicht nur ein Abrutschen des Schnellanschlusstückes vom Wasserhahn verhindert, sondern auch das Auslaufstück in der gewünschten axialen Ausrichtung zum Auslauf der Zapfstelle hält.

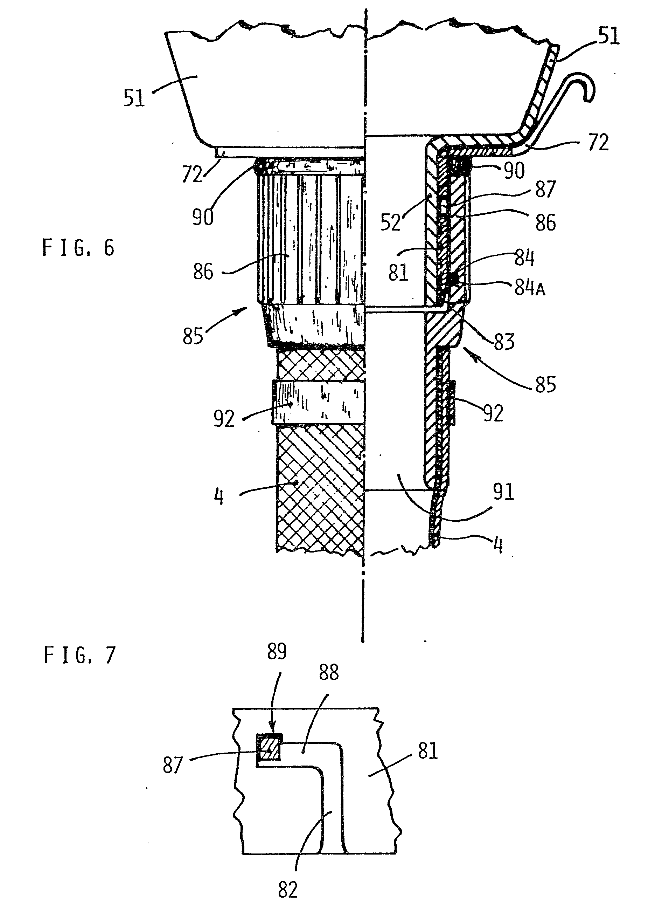

Das in Fig. 6 dargestellte Schnellanschlusstück 51 entspricht in seinem Aufbau unverändert dem Schnellanschlusstück 51, wie oben beschrieben. . Auf dem Schlauchanschlusstutzen 52 ist auf der Aussenseite eine Büchse 81 aufgezogen, in welche zwei gegenüberliegende Schlitze 82 der Bajonettkupplung, z.B. in der in Fig. 7 dargestellten Form ausgenommen sind. Die Büchse 81 ist mit dem Schlauchanschlusstutzen 52 verklebt. Das freie untere Ende der Büchse 81 ist leicht konisch zu einer Sitzfläche 83 für die O-Ringdichtung 84 ausgebildet.

Über die Büchse 81 ist die Hülse 85 der Bajonettkupplung aufsteckbar. Diese Hülse besteht aus einem oberen Teil 86, der die gegenüberliegend vom Innenumfang wegragenden Stifte 87 der Bajonettkupplung trägt, welche in die Schlitze 82 der Büchse 81 axial eingeschoben und dann in Umfangsrichtung verdreht sind. Der O-Ring 84 ist in eine Umfangsnut 84a der Hülse 85 eingelegt.

Gegen die obere Stirnseite der Hülse 85 liegt ein Ring 90 aus elastischem Werkstoff, z.B. Moosgummi, mit rechteckigem Querschnitt mit etwa der gleichen Breite wie die Wandstärke des oberen Teiles 86 der Hülse 85 an. Die Höhe dieses Ringes ist etwas grösser, als der in Schliesstellung bestehende freie Zwischenraum zwischen der Stirnfläche des oberen Teiles 86 der Hülse 85 und der Unterseite des Halteringes 72 für die Befestigung des Gurtes des Schnellanschlusstückes, an welchem der Ring angeklebt sein kann. Wenn die Schlitze 82, wie in Fig. 7 dargestellt, ausgebildet sind und am Ende des Verriegelungsabschnittes 88 eine Vertiefung 89 aufweisen, wird durch die Elastizität des leichtelastischen Ringes 90 der Stift 87 in die Vertiefung 89 eingedrückt, und die Bajonettkupplung ist gegen inbeabsichtigtes Lösen gesichert.

Am unteren Ende der Fig. 6 ist die Hülse 85 der Bajonettkupplung zu einem Schlauchanschlusstutzen 91 ausgebildet, auf welchen der Schlauch 4 aufgezogen und mittels einer Schlauchschelle 92 festgeklemmt ist. Die Aussenfläche des Abschnittes 91 kann zur besseren Haftung des Schlauches mit einem entsprechenden Profil versehen sein.

Die Aussenwandfläche des Belüftergehäuses ist entsprechend der oben beschriebenen Ausbildung der Büchse 85 geformt.

1

Sigmund Hirmer, D-8201 Riedering

--------------

P a t e n t a n s p r ü c h e :

1. Feuerlöschgerät zum Anschliessen an Haushaltszapfstellen bestehend aus einem an einem Ende mit einem
Anschlusstück an die Zapfstelle und am anderen Ende
mit einer Löschdüse versehenen Schlauch,
g e k e n n z e i c h n e t   durch
- einen Schlauch (4) mit einem dem Querschnitt von
Haushaltwasserleitungen entsprechenden Durchgangsquerschnitt und einer der weitesten Entfernung zwischen der Wasserzapfstelle und einer zu erwartenden
Brandstelle in der Gebäudeanlage entsprechenden Länge,
der in drucklosem Zustand abgeflacht und zu einer Spirale aufgerollt ist, und

- mit einem an dem an der Aussenseite der Spirale liegenden Ende des Schlauches befestigten Anschlusstück
(85) zum Anbringen und wasserdichtem Festlegen an
einer beliebigen Zapfstelle.

2. Feuerlöschgerät nach Anspruch 1,
dadurch   g e k e n n z e i c h n e t , dass
das Anschlusstück eine Überwurfmutter (85) mit Bajonettkupplung ist und an den Wasserstellen Wasserbelüfter angebracht sind, deren Gehäuse Schlitze (82)
für die Stifte (87) der Bajonettkupplung und Sitzflächen (83) für eine Dichtung (84) vorgesehen sind.

3. Feuerlöschgerät
dadurch   g e k e n n z e i c h n e t , dass
das Anschlusstück an ein Schnellanschlusstück anschliessbar ist, und
das Schnellanschlusstück besteht aus

- einer druckdichten, druckfesten Aussenhülle (51),

- die von einem kleinsten Querschnitt an einem Schlauchanschlusstutzen (52) entsprechend dem Schlauchquerschnitt auf einem Innenquerschnittsbereich am freien Rand grösser, als die Aussenquerschnittsfläche jeder in der Gebäudeanlage verfügbaren Zapfstelle sich erweitert, und

- am freien Rand der Aussenhülle (51) eine leicht elastisch verformbare Membran (53) druckdicht befestigt ist, die vom freien Rand der Aussenhülle (51) bis zu einer Mittelöffnung (55) mit kleinerer Querschnittsfläche, als dem kleinsten zu erwartenden Aussenquerschnitt der Zapfstelle verläuft und von der Mittelöffnung (55) eine schurzartige Lippendichtung (56) in das Innere des Gehäuses vorspringt und austauschbare Anordnungen (57) vorgesehen sind, um die elastische Membran (53) gegen Innendruck abzustützen,

- wobei am Schlauchanschlusstutzen (52) der Aussenhülle (51) des Schnellanschlusstückes Schlitze (82) für die Stifte (87) der Bajonettkupplung und entsprechende Dichtflächen (83) für eine Dichtung (84) in der Überwurfmutter (85) der Bajonettkupplung vorgesehen sind.

4. Feuerlöschgerät nach einem der vorhergehenden Ansprüche dadurch g e k e n n z e i c h n e t , dass die Stifte (81) der Bajonettkupplung einen quadratischen Querschnitt aufweisen und mit Spiel in die Schlitze (82) der Bajonettkupplung eingreifen.

5. Feuerlöschgerät nach einem der vorhergehenden Ansprüche, dadurch g e k e n n z e i c h n e t , dass die Bajonettschlitze (82) am Ende ihres Verriegelungsabschnittes (88) eine Vertiefung (89) zur Aufnahme der Stifte (87) bei Bewegung in Löserichtung der Kupplung aufweisen.

6. Feuerlöschgerät nach Anspruch 5,
dadurch g e k e n n z e i c h n e t , dass zwischen dem freien Rand der Überwurfmutter (85) und einer Gegenfläche am Schnellanschlusstück (51) bzw. Belüftergehäuse oder Wasserauslauf ein stark elastischer Ring (90) aus Weichgummi, Schaumstoff od.dgl. eingelegt ist, der beim Schliessen der Bajonettkupplung elastisch zusammengedrückt ist.

7. Feuerlöschgerät nach einem der vorhergehenden Ansprüche,
dadurch g e k e n n z e i c h n e t , dass die Dichtung ein in einer Umfangsnut (84a) der Überwurfmutter (85) der Bajonettkupplung eingelegter elastischer Dichtungsring (84) ist, der mit einer sich in Aufsteckrichtung der Kupplung erweiternden leicht konischen Dichtfläche (83) am Schlauchanschusstück (51) bzw. am Belüftergehäuse zusammenwirkt.

0038421

**FIG. 1**

**FIG. 2**

FIG. 3

FIG. 4

FIG. 5

0038421

FIG. 6

FIG. 7

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - C - 251 282 (SCHWARZ)<br>* Seite 1, Figur * | 1 |
| | -- | |
| | FR - A - 671 280 (L'AUXILIAIRE DES CHEMINS DE FER)<br>* Seite 1; Seite 2; Figuren 4 bis 7 * | 1,3 |
| | -- | |
| | GB - A - 1 013 204 (GOLDBERG)<br>* Seite 2, Zeilen 38 bis 88; Figuren 1 und 2 * | 2,6,7 |
| | -- | |
| | DE - B - 2 717 338 (SCHLEGEL)<br>* Spalten 2,3 und 4; Figuren 1 und 2 * | 1 |
| | ------ | |

### KLASSIFIKATION DER ANMELDUNG (Int. Cl.³)

A 62 C 35/20
F 16 L 37/04
        37/24
        33/02
        11/10

### RECHERCHIERTE SACHGEBIETE (Int. Cl.³)

F 16 L
A 62 C

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 23.06.1981 | WOHLRAPP |

EPA form 1503.1  06.78